(19) Europäisches Patentamt / European Patent Office / Office européen des brevets

(11) **EP 3 675 231 B1**

(12) **EUROPEAN PATENT SPECIFICATION**

(45) Date of publication and mention of the grant of the patent:
**08.04.2026 Bulletin 2026/15**

(21) Application number: **19820547.8**

(22) Date of filing: **05.06.2019**

(51) International Patent Classification (IPC):
***H01M 10/058*** $^{(2010.01)}$ ***H01M 10/052*** $^{(2010.01)}$
***H01M 4/525*** $^{(2010.01)}$

(52) Cooperative Patent Classification (CPC):
**H01M 50/417; H01M 50/403; H01M 50/406; H01M 50/489**

(86) International application number:
**PCT/KR2019/006828**

(87) International publication number:
**WO 2019/240427 (19.12.2019 Gazette 2019/51)**

(54) **LITHIUM SECONDARY BATTERY COMPRISING A SEPARATOR AND MANUFACTURING METHOD THEREOF**

LITHIUM-SEKUNDÄRBATTERIE MIT EINEM SEPARATOR UND HERSTELLUNGSVERFAHREN DAFÜR

BATTERIE SECONDAIRE AU LITHIUM COMPRENANT UN SÉPARATEUR ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2018 KR 20180067718**
**20.11.2018 KR 20180143787**

(43) Date of publication of application:
**01.07.2020 Bulletin 2020/27**

(73) Proprietor: **LG CHEM, LTD.**
**Yeongdeungpo-gu,**
**Seoul 07336 (KR)**

(72) Inventors:
- **LEE, Joo-Sung**
**Daejeon 34122 (KR)**
- **SONG, Heon-Sik**
**Daejeon 34122 (KR)**
- **BAE, Won-Sik**
**Daejeon 34122 (KR)**
- **RYU, Bi-Oh**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
**KR-A- 20060 127 272** **KR-A- 20100 059 933**
**KR-A- 20160 052 332** **KR-A- 20160 129 583**
**KR-A- 20160 131 761** **KR-A- 20180 006 429**
**US-A1- 2011 052 987** **US-A1- 2012 088 149**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 675 231 B1

## Description

### TECHNICAL FIELD

The present disclosure relates to a lithium secondary battery comprising a separator and a manufacturing method thereof.

### BACKGROUND ART

Recently, there has been an increasing interest in energy storage technology day by day. As the application field of energy storage technology has been extended to mobile phones, camcorders, lap-top computers, and even electric cars, many efforts have been devoted to studying and developing electrochemical devices. In this aspect, electrochemical devices are attracting more attention, and especially, development of rechargeable secondary batteries is the focus of attention, and more recently, in the development of batteries, new electrode and battery design for improving the capacity density and specific energy have been studied and developed.

In currently available secondary batteries, lithium secondary batteries developed in early 1990's have much higher operating voltage and energy density than traditional batteries using an aqueous electrolyte solution such as Ni-MH, Ni-Cd, lead-acid batteries, and by virtue of these advantages, lithium secondary batteries are gaining much attention.

A lithium secondary battery includes a positive electrode, a negative electrode, an electrolyte solution and a separator, and the separator is required to have insulating properties to separate the positive electrode from the negative electrode for electrical isolation and high ionic conductivity to increase the lithium ion permeability based on high porosity.

The separator needs to have a large difference between shutdown temperature and meltdown temperature to ensure the safety of the lithium secondary battery including the separator. However, when the difference between meltdown temperature and shutdown temperature is too large, the processing of the separator may reduce.

To increase the meltdown temperature, polypropylene having a higher melting temperature than polyethylene may be added to a wet polyethylene separator. However, the problem of this method is that an increase in meltdown temperature does not reach the desired temperature range due to a small amount of polypropylene added.

Another way to control the meltdown temperature of the separator is to use a crosslinked polyolefin porous membrane. In detail, a crosslinking additive may be added to increase the meltdown temperature. However, in a certain case, the crosslinked polyolefin porous membrane increases in resistance, resulting in performance degradation of the electrochemical device, and even though the meltdown temperature of the separator is high, safety of the lithium secondary battery is not ensured.

US-A-2011/052987, forming the basis for the preamble of claim 1, teaches a non-aqueous electrolyte battery including a positive electrode having a positive electrode active material capable of intercalating and de-intercalating a lithium ion, a negative electrode having a negative active material capable of intercalating and de-intercalating a lithium ion, a separator interposed between the positive electrode and the negative electrode, and a non-aqueous electrolyte. The heat generation starting temperature of the positive electrode is at least 180°C.

The separator includes heat-resistant fine particles and a thermoplastic resin. It preferably has a multilayer structure including a heat-resistant layer for suppressing the thermal shrinkage and isolating the positive electrode from the negative electrode at high temperatures, and a shutdown layer for ensuring the shutdown property. The shutdown layer maybe a polyethylene porous film, a polypropylene porous film or a polyester porous film.

US-A-2012/088149 teaches a microporous membrane comprising at least one layer comprising in turn polymethylpentene in an amount of 22-40 weight % based on the weight of the layer. The microporous membrane may be used as a separator film of a lithium ion secondary battery.

KR-10-2016-0129583 teaches a lithium secondary battery comprising a positive electrode, a negative electrode and a polyolefin porous membrane separator interposed between the positive electrode and the negative electrode.

### DISCLOSURE

#### Technical Problem

Therefore, the present disclosure is directed to providing a lithium secondary battery including a separator with improved safety and processing attributed to a proper difference between shutdown temperature and meltdown temperature.

The present disclosure is further directed to providing a lithium secondary battery with improved performance as an electrochemical device by having suitable resistance for use in an electrochemical device by controlling the shutdown temperature within a specific numerical range.

The present disclosure is further directed to providing a lithium secondary battery that defines a relationship

between the self-heating temperature of the positive electrode and the meltdown temperature of the separator, and solves the problem with low safety despite having a high meltdown temperature as well as improving the processing.

Technical Solution

An aspect of the present disclosure provides a lithium secondary battery according to the following implementation embodiments.

According to a first aspect, the present invention provides a lithium secondary battery comprising a positive electrode, a negative and a separator interposed between the positive electrode and the negative electrode, wherein the separator includes a crosslinked polyolefin porous membrane crosslinked by siloxane crosslinking bonds or peroxide crosslinking bonds and having a shutdown temperature of 125 to 145°C, a difference between the shutdown temperature and a meltdown temperature ranging between 20 and 80°C, and a meltdown temperature that is higher by 5 to 35°C than a self-heating temperature of the positive electrode, andwherein the positive electrode comprises a current collector having disposed thereon a positive electrode active material layer comprising $Li[Ni_aCo_bMn_cM_{1d}M_{2e}]O_2$ as a positive electrode active material, wherein $M_1$ and $M_2$ are independently any one selected from the group consisting of Al, Ni, Co, Fe, Mn, V, Cr, Ti, W, Ta, Mg and Mo, and a, b, c, d and e are independently atomic fractions of elements in the oxide composition where $a \geq 0.5$, $a+b+c+d+e = 1$, $b>d>e$.

According to second aspect, the present invention provides a method for manufacturing a lithium secondary battery as defined above, comprising:

(S1) inputting a high density polyolefin having a weight average molecular weight of 200,000 to 1,000,000, a diluent, a vinyl group-containing alkoxy silane, an initiator and a crosslinking catalyst into an extruder and mixing to prepare a silane grafted polyolefin composition, followed by reactive extrusion, and forming and stretching;
(S2) extracting the diluent from the stretched sheet to prepare a polyolefin porous membrane;
(S3) heat-setting the porous membrane and crosslinking for 15 hours to 48 hours in the presence of water to prepare a separator having the crosslinked polyolefin porous membrane; and
(S4) interposing the separator including the crosslinked polyolefin porous membrane between a positive electrode and a negative electrode;
wherein the vinyl group-containing alkoxy silane is present in an amount of 0.1 to 4 parts by weight based on a total of 100 parts by weight of the polyolefin and the diluent.

Advantageous Effects

The lithium secondary battery according to an embodiment of the present disclosure may provide a lithium secondary battery with improved safety and processing by controlling a difference between shutdown temperature and meltdown temperature within a specific numerical range.

The lithium secondary battery according to an embodiment of the present disclosure provides a lithium secondary battery with improved heat resistance properties by increasing the meltdown temperature through crosslinking of polyolefin, and improved resistance by controlling the shutdown temperature of the separator, and a manufacturing method thereof.

The lithium secondary battery according to an embodiment of the present disclosure can solve the problem with low safety despite having a high meltdown temperature and improve the processing, by controlling the self-heating temperature of the positive electrode and the meltdown temperature of the separator within a specific numerical range.

BRIEF DESCRIPTION OF DRAWINGS

FIG. 1 shows die drool occurred in a separator according to a comparative example of the present disclosure.
(a) and (b) of FIG. 2 show the cell shape before/after the nail penetration test of a lithium secondary battery according to a comparative example, respectively.
(a) and (b) of FIG. 3 show the cell shape before/after the nail penetration test of a lithium secondary battery according to an example, respectively.

MODE FOR DISCLOSURE

Hereinafter, the present disclosure will be described in detail. It should be understood that the terms or words used in the specification and the appended claims should not be construed as limited to general and dictionary meanings,

but interpreted based on the meanings and concepts corresponding to technical aspects of the present disclosure on the basis of the principle that the inventor is allowed to define terms appropriately for the best explanation.

It will be further understood that when an element is referred to as being「connected to」another element, it can be「directly connected to」the other element or intervening elements may be present. Additionally, the connection covers physical connection as well as electrochemical connection.

The term「comprises」when used in this specification, specifies the presence of stated elements, but does not preclude the presence or addition of one or more other elements, unless the context clearly indicates otherwise.

Additionally,「comprise」and/or「comprising 」when used in this specification, specifies the presence of stated features, integers, steps, operations, elements, components and/or groups thereof, but does not preclude the presence or addition of one or more other features, integers, operations, elements, components, and/or groups thereof.

It will be understood that「about」and「substantially」are used herein in the sense of at, or nearly at, when given the manufacturing and material tolerances inherent in the stated circumstances and are used to prevent the unscrupulous infringer from unfairly taking advantage of the disclosure where exact or absolute figures are stated as an aid to understanding the present disclosure.

It will be further understood that「combination thereof」in Markush type language as used herein, refers to a mixture or combination of one or more selected from the group consisting of elements stated in Markush type language, and specifies the inclusion of one or more selected from the group consisting of the elements.

「A and/or B」when used in this specification, specifies「either A or B or both」.

The present disclosure relates to a lithium secondary battery including a separator including a crosslinked polyolefin porous membrane and a manufacturing method thereof.

When the separator having a large difference between shutdown temperature and meltdown temperature is used, the safety of the lithium secondary battery is improved. However, when a difference between meltdown temperature and shutdown temperature is too large, processing of the separator may reduce.

The inventors use a crosslinked polyolefin porous membrane to increase the meltdown temperature for a large difference between shutdown temperature and meltdown temperature. However, in certain cases, the crosslinked polyolefin porous membrane increases in resistance, resulting in performance degradation of an electrochemical device.

Meanwhile, even when the meltdown temperature of the separator is high, in some cases, safety of the lithium secondary battery is not ensured. For example, if the meltdown temperature of the separator is high, but the self-heating temperature of the positive electrode is high, safety and/or processing of the lithium secondary battery is not ensured.

The inventors address this problem, and aim at providing a lithium secondary battery that ensures safety and a membrane forming process of a separator by defining a relationship between shutdown temperature and meltdown temperature, solves the problem with low safety despite having a high meltdown temperature and improves the processing by defining a relationship between self-heating temperature and meltdown temperature, and improves resistance by controlling the shutdown temperature within a specific numerical range.

The lithium secondary battery according to an aspect of the present disclosure has a close relation between shutdown temperature, a difference between shutdown temperature and meltdown temperature, and a difference between meltdown temperature and self-heating temperature. That is, to solve the technical problem of the present disclosure, it is necessary to meet the numerical ranges of the above-described components.

Hereinafter, the present disclosure will be described in detail.

The lithium secondary battery according to an aspect of the present disclosure is a lithium secondary battery including a positive electrode, a negative electrode and a separator interposed between the positive electrode and the negative electrode.

The separator includes a crosslinked polyolefin porous membrane having a shutdown temperature of 125 to 145°C, a difference between the shutdown temperature and a meltdown temperature ranging between 20 and 80°C, and the meltdown temperature that is higher by 5 to 35°C than the self-heating temperature of the positive electrode.

In the present disclosure, the 'shutdown temperature' refers to a temperature when micropores in the separator are clogged due to a sudden flow of current in a large amount caused by an internal or external short.

In a particular embodiment of the present disclosure, the shutdown temperature may be 125 to 145°C, or 128 to 143°C, or 136 to 141°C.

When the shutdown temperature is within the numerical range, safety can be maintained even in a high temperature environment such as thermal runaway caused by a short. Even though the crosslinked polyolefin porous membrane satisfies a difference between shutdown temperature and meltdown temperature ranging between 20 and 80°C and the meltdown temperature that is higher by 5 to 35°C than the self-heating temperature, when the shutdown temperature is less than 125°C, pore clogging occurs at too low temperature, which makes it unsuitable for use as a separator for an electrochemical device, and resistance greatly increases. When the shutdown temperature exceeds 145°C, pore clogging is delayed, making it difficult to ensure safety in an electrochemical device, for example, due to overcharge.

In detail, the shutdown temperature is measured by the following method:

First, air permeability of the porous membrane is measured with the porous membrane exposed to the increasing temperature condition (5°C/min starting from 30°C). In this instance, temperature when air permeability (Gurley number) of the porous membrane exceeds 100,000 sec/100cc for the first time is defined as the shutdown temperature. The air permeability of the porous membrane may be measured using air permeability measurement instrument (Asahi Seiko, EGO-IT) in accordance with JIS P8117.

In the present disclosure, the 'meltdown temperature' refers to temperature when the separator melts due to a sharp reduction in the mechanical strength of the separator as polyolefin crystals melt with the increasing temperature of the lithium secondary battery.

The meltdown temperature is measured using Thermomechanical Analysis (TMA) after collecting porous membrane samples in each of machine direction (MD) and transverse direction (TD). In detail, the sample of 10mm length is put into TMA equipment (TA Instrument, Q400) and allowed to be exposed to the increasing temperature condition (5°C/min starting from 30°C) under the tension force of 10mN. As the temperature increases, the length of the sample changes, and the temperature when the sample is broken due to a sharp increase in length is measured. Each of MD and TD is measured, and a higher temperature is defined as the meltdown temperature of the corresponding sample.

In a particular embodiment of the present disclosure, the meltdown temperature of the crosslinked polyolefin porous membrane may be 150 to 230°C, or 155 to 210°C, or 179 to 210°C.

The lithium secondary battery according to an aspect of the present disclosure is a lithium secondary battery including a positive electrode, a negative electrode and a separator interposed between the positive electrode and the negative electrode.

The separator includes a crosslinked polyolefin porous membrane having a difference between shutdown temperature and meltdown temperature of the crosslinked polyolefin porous membrane ranging between 20 and 80°C.

In a particular embodiment of the present disclosure, a difference between shutdown temperature and meltdown temperature of the crosslinked polyolefin porous membrane may be 20 to 80°C, or 25 to 75°C, or 40 to 74°C.

When a difference between shutdown temperature and meltdown temperature is the same as the above-described numerical range, a safer electrochemical device may be provided. In detail, when a difference between shutdown temperature and meltdown temperature is within the above-described numerical range, pore clogging occurs at a lower temperature, thereby obtaining a safe electrochemical device, and melting of the separator occurs at a higher temperature, thereby obtaining a safe electrochemical device.

Even though the crosslinked polyolefin porous membrane satisfies the shutdown temperature of 125 to 145°C and the meltdown temperature that is higher by 5 to 35°C than self-heating temperature, when a difference between shutdown temperature and meltdown temperature is less than 20°C, melting of the separator occurs earlier than shutdown caused by pore clogging, failing to prevent a short circuit between the negative electrode and the positive electrode, and thus there is a higher likelihood that a fire will occur. Accordingly, it is impossible to ensure safety of the lithium secondary battery. On the contrary, when a difference between shutdown temperature and meltdown temperature exceeds 80°C, die drool occurs, which makes it difficult to form the separator membrane.

The lithium secondary battery according to an aspect of the present disclosure is a lithium secondary battery including a positive electrode, a negative electrode and a separator interposed between the positive electrode and the negative electrode.

The separator includes a crosslinked polyolefin porous membrane having the meltdown temperature that is higher by 5 to 35°C than the self-heating temperature of the positive electrode.

In a particular embodiment of the present disclosure, the meltdown temperature may be higher by 5 to 35°C, or 7 to 34°C, or 9 to 34°C than the self-heating temperature of the positive electrode. When the meltdown temperature of the crosslinked polyolefin porous membrane is higher by the above-described numerical range than the self-heating temperature of the positive electrode, the lithium secondary battery may have high safety and improved processing. Even though the crosslinked polyolefin porous membrane satisfies the shutdown temperature of 125 to 145°C and a difference between shutdown temperature and meltdown temperature ranging between 20 and 80°C, when a difference between meltdown temperature and self-heating temperature is less than 5°C, safety of the lithium secondary battery cannot be substantially ensured through the control of the separator despite the very high meltdown temperature of the separator. It is not caused by thermal shrinkage or membrane melting of the separator, and this is because a fire occurs in the positive electrode active material itself. On the contrary, when a difference between meltdown temperature and self-heating temperature exceeds 35°C, processing in the separator preparation process reduces.

In the present disclosure, the 'self-heating temperature' refers to the lowest temperature measured when the positive electrode starts an exothermic reaction under a specific measurement condition.

The self-heating temperature is measured by the following method:
In the present disclosure, the self-heating temperature of the positive electrode may be measured using Differential Scanning Calorimetry (DSC). The first peak temperature in heat changes in the direction of heat generation from the positive electrode exposed to the increasing temperature condition (5°C/min starting from 30°C) is defined as the self-heating temperature.

That is, in the present disclosure, the self-heating temperature of the positive electrode is temperature that is not caused by the external factor, and is caused by the internal factor such as destruction of the positive electrode active material.

In a particular embodiment of the present disclosure, the self-heating temperature of the positive electrode may be 150 to 220°C, or 155 to 215°C, or 158 to 186°C. The self-heating temperature of the positive electrode may change depending on the type and composition of the positive electrode active material, and the positive electrode according to the present disclosure has the self-heating temperature within the above-described numerical range.

In the lithium secondary battery according to the present invention, the positive electrode active material includes $Li[Ni_aCo_bMn_cM_{1d}M_{2e}]O_2$ ($M_1$ and $M_2$ are independently any one selected from the group consisting of Al, Ni, Co, Fe, Mn, V, Cr, Ti, W, Ta, Mg and Mo, and a, b, c, d and e are independently atomic fractions of elements in the oxide composition where $a \geq 0.5$, $a+b+c+d+e = 1$, $b>d>e$).

The positive electrode active material is a Ni-rich positive electrode active material having a layered structure, and it is relatively unsafe due to its low self-heating temperature, but its advantage is high capacity of 200 mAh/g or more. Additionally, nickel (Ni) is less poisonous to humans than cobalt (Co) and has a low price. That is, the Ni-rich positive electrode active material may effectively increase the safety of the lithium secondary battery by controlling the meltdown temperature, the shutdown temperature and the self-heating temperature, in particular, according to an aspect of the present disclosure.

On the contrary, when the positive electrode active material is not a Ni-rich positive electrode active material, namely, when the nickel content is low, the lithium secondary battery according to an aspect of the present disclosure cannot satisfy the desired initial capacity itself. In the lithium secondary battery according to an aspect of the present disclosure, the charge potential may be increased to satisfy the desired initial capacity, but in this case, the cycling characteristics may notably degrade.

That is, the lithium secondary battery according to the present invention uses the Ni-rich positive electrode active material as described above to satisfy the initial capacity and cycling characteristics at the same time.

In a particular embodiment of the present disclosure, as the positive electrode active material has a higher nickel content, the self-heating temperature of the positive electrode may be lower. Accordingly, as the nickel content is higher, the positive electrode may self heat earlier, which requires stricter control in terms of safety.

In a particular embodiment of the present disclosure, the positive electrode active material is a Ni-rich positive electrode active material ($a \geq 0.5$), and in this instance $0.6 \leq a \leq 0.95$, or $0.7 \leq a \leq 0.95$, or $0.8 \leq a \leq 0.95$, or $0.88 \leq a \leq 0.90$, and the value of a may be a combination of upper and lower limits.

In a particular embodiment of the present disclosure, the self-heating temperature may be controlled by controlling the type and amount of the positive electrode active material.

For example, in the positive electrode active material, d and e = 0, and $0.5 \leq a \leq 0.95$.

For example, in the positive electrode active material, d and e = 0, and $0.6 \leq a \leq 0.95$.

When the positive electrode active material includes all nickel, manganese and cobalt and the nickel content is particularly high, capacity increases but safety is low. In other words, as the nickel content in the positive electrode active material is higher, the self-heating temperature of the positive electrode may be lower. That is, when the Ni-rich positive electrode active material is used, the safety of the lithium secondary battery may be effectively increased by controlling the meltdown temperature, the shutdown temperature and the self-heating temperature according to an aspect of the present disclosure.

For example, in the positive electrode active material, M1 may be Al, $0.6 \leq a \leq 0.95$, and $0.01 \leq d \leq 0.10$.

When the positive electrode active material additionally includes aluminum, it is advantageous in terms of structural stability improvement of the positive electrode active material under high voltage.

In a particular embodiment of the present disclosure, the positive electrode active material may further include one of $LiCoO_2$, $LiNiO_2$, $LiMn_2O_4$, $LiAl_2O_3$, $LiCoPO_4$, $LiFePO_4$, $LiNiMnCoO_2$ and $LiNi_{1-x-y-z}Co_xM1_yM2_zO_2$ (M1 and M2 are independently any one selected from the group consisting of Al, Ni, Co, Fe, Mn, V, Cr, Ti, W, Ta, Mg and Mo, and x, y and z are independently atomic fractions of elements in the oxide composition where $0 \leq x \leq 0.5$, $0 \leq y \leq 0.5$, $0 \leq z \leq 0.5$, $x+y+z \leq 1$), or their mixture.

In a particular embodiment of the present disclosure, the positive electrode active material may include one of lithium manganese oxide, lithium cobalt oxide, lithium nickel oxide, lithium iron oxide, lithium aluminum oxide and their lithium composite oxide, or their mixture.

The crosslinked polyolefin porous membrane is crosslinked by siloxane crosslinking bonds or peroxide crosslinking bonds.

In a particular embodiment of the present disclosure, the siloxane crosslinking bonds may be represented by Chemical formula 1:

[Chemical formula 1] $-(OH)_2Si-O-Si(OH)_2-$.

In a particular embodiment of the present disclosure, the peroxide crosslinking bonds may be represented by Chemical formula 2:

[Chemical formula 2] -O-O-.

The present disclosure obtains the separator with the improved meltdown temperature due to crosslinking by siloxane crosslinking bonds or peroxide crosslinking bonds.

In a particular embodiment of the present disclosure, the degree of crosslinking of the crosslinked polyolefin porous membrane may be 20 to 90%, or 25 to 80%, or 30 to 70%. When the degree of crosslinking satisfies this numerical range, the heat resistance stability effect of the separator can be expected.

In the present disclosure, the degree of crosslinking (or gelation ratio ) refers to a ratio of the number of crosslinking bonds to the total number of structural units of polymer. In the present disclosure, the degree of crosslinking may be measured by the following method:

The degree of crosslinking is measured in accordance with ASTM D2765. The degree of crosslinking (gel content) is measured by measuring an amount of insoluble substance remaining after extraction in the reflux condition of xylene using the property that uncrosslinked linear low density polyethylene melts in boiling xylene. First, about 0.3g of a sample is put in a sample bag and weighed. 1 liter of a xylene solution containing 1% of an anti-oxidant BHT is filled in a 2 liter kettle with a condenser, and the sample bag is put in the kettle such that it is completely immersed in xylene, followed by heating. When xylene boils and reflux starts (about 140°C), extraction is performed for 12 hours. After the extraction for 12 hours, the sample bag is picked up and dried in a 105°C oven for 10 min and then additionally dried at 150°C for 1 hour. The dried sample is transferred to a desiccator, cooled down to room temperature and weighed. In this instance, the degree of crosslinking is as below.

$$\text{Degree of crosslinking} = 100 - \text{extract}\%$$

The degree of crosslinking may be measured by the above-described method, but is not limited thereto and any method for measuring the degree of crosslinking commonly used in the art can be used without limitation.

In another aspect of the present disclosure, the lithium secondary battery may be manufactured by the following method, but is not limited thereto.

The method for manufacturing the lithium secondary battery according to an aspect of the present disclosure includes (S1) inputting a high density polyolefin having the weight average molecular weight of 200,000 to 1,000,000, a diluent, a vinyl group-containing alkoxy silane, an initiator and a crosslinking catalyst into an extruder and mixing them to prepare a silane grafted polyolefin composition, and performing reactive extrusion of the silane grafted polyolefin composition, followed by forming and stretching; (S2) extracting the diluent from the stretched sheet to prepare a polyolefin porous membrane; (S3) heat-setting the porous membrane and crosslinking for 15 hours to 48 hours in the presence of water to prepare a separator having the crosslinked polyolefin porous membrane; and (S4) interposing the separator including the crosslinked polyolefin porous membrane between the positive electrode and the negative electrode.

The vinyl group-containing alkoxy silane is present in an amount of 0.1 to 4 parts by weight based on the total 100 parts by weight of the polyolefin and the diluent.

The separator includes the crosslinked polyolefin porous membrane having the shutdown temperature of 125 to 145°C, a difference between shutdown temperature and meltdown temperature ranging between 20 and 80°C, and the meltdown temperature that is higher by 5 to 35°C than the self-heating temperature of the positive electrode.

Hereinafter, the method for manufacturing the lithium secondary battery according to an aspect of the present disclosure will be described in detail.

First, a high density polyolefin having the weight average molecular weight of 200,000 to 1,000,000, a diluent, a vinyl group-containing alkoxy silane, an initiator and a crosslinking catalyst are inputted into an extruder and mixed to prepare a silane grafted polyolefin composition and reactive extrusion of the silane grafted polyolefin composition is performed, followed by forming and stretching (S1).

In a particular embodiment of the present disclosure, the high density polyolefin may be polyethylene; polypropylene; polybutylene; polypentene: polyhexene: polyoctene: copolymers of at least two of ethylene, propylene, butene, pentene, 4-methylpentene, hexene and octene; or their mixture.

In particular, among them, a high density polyethylene is the most desirable because of high crystallinity and a high melting point of resin.

When a low density polyolefin, for example, a low density polyethylene is used, pore clogging may occur in the separator preparation process due to the low melting temperature of the low density polyethylene.

In a particular embodiment of the present disclosure, the weight average molecular weight of the high density

polyolefin may be 200,000 to 1,000,000 or 220,000 to 700,000, or 250,000 to 500,000. In the present disclosure, the high molecular weight polyolefin having the weight average molecular weight of 200,000 to 1,000,000 is used as a starting material for separator preparation, and finally, it is possible to obtain the separator having very good strength and heat resistance while ensuring uniformity and membrane formation processing of the separator film. On the contrary, when the weight average molecular weight of the high density polyolefin exceeds 1,000,000, it is difficult to prepare the separator having a uniform thickness due to a thickness difference in the separator preparation. In an aspect of the present disclosure, it is possible to control the shutdown temperature and/or the meltdown temperature by controlling the type and/or the molecular weight of polyolefin.

The diluent may include liquid or solid paraffins, waxes, mineral oils and soybean oils used in a wet process for separator preparation.

In a particular embodiment of the present disclosure, the diluent may include diluents that induce liquid-liquid phase separation with polyolefin, for example, phthalic acid esters such as dibutyl phthalate, dihexyl phthalate, and dioctyl phthalate; aromatic ethers such as diphenyl ether and benzyl ether; C10 to C20 fatty acids such as palmitic acid, stearic acid, oleic acid, linoleic acid, and linolenic acid; C10 to C20 fatty acid alcohols such as palmityl alcohol, stearyl alcohol, and oleyl alcohol; and fatty acid esters including palmitic acid mono-, di- or triester, stearic acid mono-, di- or triester, oleic acid mono-, di- or triester, linoleic acid mono-, di- or trimester, resulting from esterification between saturated and unsaturated C4 to C26 fatty acids in the fatty acid group, or one or more fatty acids having substitution of double bond of unsaturated fatty acids with epoxy, and alcohol having 1 to 8 hydroxyl groups and 1 to 10 carbon atoms.

The diluent may include the above-described substances, used singly or in combination.

A weight ratio between the polyolefin and the diluent in the polyolefin composition may be 50 : 50 to 20 : 80, in particular, 40 : 60 to 25 : 75.

The crosslinking agent may include a vinyl group-containing alkoxy silane crosslinking agent and a peroxide crosslinking agent, used singly or in combination.

The vinyl group-containing alkoxy silane crosslinking agent is a crosslinking agent that causes silane crosslinking reaction, and serves to crosslink the polyolefin by grafting onto polyolefin by the vinyl group and water crosslinking reaction by the alkoxy group.

In a particular embodiment of the present disclosure, the vinyl group-containing alkoxy silane crosslinking agent may include a compound represented by the following chemical formula 3:

[Chemical formula 3]

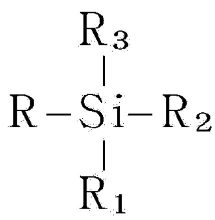

In the chemical formula 3, each of $R_1$, $R_2$, and $R_3$ is independently C1 to C10 alkoxy group or C1 to C10 alkyl group, and in this instance, at least one of $R_1$, $R_2$, and $R_3$ is an alkoxy group.

The R is a vinyl group, an acryloxy group, a methacryloxy group or C1 to C20 alkyl group, and in this instance, at least one hydrogen of the alkyl group is substituted with a vinyl group, an acryloxy group or a methacryloxy group.

Meanwhile, additionally, the R may further include an amino group, an epoxy group or an isocyanate group.

In a particular embodiment of the present disclosure, the vinyl group-containing alkoxy silane may include vinyltrimethoxysilane, vinyltriethoxysilane, vinyltriacetoxysilane, (3-methacryloxypropyl)trimethoxysilane, (3-methacryloxypropyl)triethoxysilane, vinylmethyldimethoxysilane, vinyl-tris(2-methoxyethoxy)silane, vinylmethyldiethoxysilane, or their mixture.

The crosslinking agent may be present in an amount of 0.1 to 4 parts by weight, in particular, 0.2 to 3 parts by weight, in more particular, 0.3 to 2 parts by weight based on the total 100 parts by weight of the polyolefin and the diluent. When a mixture of the vinyl group-containing alkoxy silane crosslinking agent and the peroxide crosslinking agent is used as the crosslinking agent, the peroxide crosslinking agent may be present in an amount of 0.1 to 20 parts by weight, in particular, 1 to 10 parts by weight, in more particular, 2 to 5 parts by weight based on 100 parts by weight of the vinyl group-containing alkoxy silane crosslinking agent. In an aspect of the present disclosure, the meltdown temperature may be controlled by controlling the amount and type of crosslinking agent.

In a particular embodiment of the present disclosure, the initiator includes any type of initiator that can produce radicals without limitation. Non-limiting examples of the initiator include 2,5-dimethyl-2,5-di(tert-butylperoxy)hexane

(DHBP)), benzoyl peroxide, acetyl peroxide, dilauryl peroxide, di-ter-butyl peroxide, dicumyl peroxide, cumyl peroxide, hydrogen peroxide and potassium persulfate.

In a particular embodiment of the present disclosure, the initiator may be present in an amount of 0.1 to 20 parts by weight, in particular, 1 to 10 parts by weight, in more particular, 2 to 5 parts by weight based on the total 100 parts by weight of the crosslinking agent. When the initiator content satisfies the above-described numerical range, it is possible to prevent silane graft yield reduction caused by the low initiator content, or crosslinking between polyolefin in an extruder due to the high initiator content.

In a particular embodiment of the present disclosure, the shutdown temperature may be controlled by the amount of the peroxide crosslinking agent, and as the amount of the corresponding crosslinking agent is higher, a lower shutdown temperature may be implemented. Additionally, the meltdown temperature may be controlled by the amount of the vinyl group-containing alkoxy silane crosslinking agent, and as the amount of the corresponding crosslinking agent is higher, a higher meltdown temperature may be obtained.

The silane grafted polyolefin composition may further include general additives for improving a specific function, for example, an oxidation stabilizing agent, a UV stabilizing agent, an antistatic agent and a nucleating agent, if necessary.

The crosslinking agent may be at least two types, and each may be simultaneously inputted, or at least one type of crosslinking agent may be inputted first and then at least one other type of crosslinking agent may be inputted. That is, the crosslinking agents may be inputted at a time interval, and the type of crosslinking agent inputted may be same or different.

According to an embodiment of the present disclosure, in the step of preparing the silane crosslinked polyolefin composition, the high density polyolefin, the diluent and the crosslinking agent may be inputted at the same time and mixed, and the peroxide crosslinking agent may be additionally inputted immediately before reactive extrusion.

In a particular embodiment of the present disclosure, the crosslinking catalyst may include carboxylate of metal, for example, tin, zinc, iron, lead and cobalt, an organic base, an inorganic acid and an organic acid. Non-limiting examples of the crosslinking catalyst includes the carboxylate of metal including dibutyltin dilaurate, dibutyltin diacetate, Tin(II) acetate, Tin(II) caprylate, zinc naphthenate, zinc caprylate and cobalt naphthenate, the organic base including ethylamine, dibutylamine, hexyl amine and pyridine, the inorganic acid including sulfuric acid and hydrochloric acid, and the organic acid including benzoic acid , sulfonic acid, acetic acid, stearic acid and maleic acid. Additionally, the crosslinking catalyst may use them singly or in combination.

In a particular embodiment of the present disclosure, the crosslinking catalyst may be present in an amount of 0.1 to 20 parts by weight, or 1 to 10 parts by weight, or 2 to 5 parts by weight based on the total 100 parts by weight of the crosslinking agent. When the amount of the crosslinking catalyst satisfies the above-described numerical range, the desired level of silane crosslinking reaction may occur, and an unwanted side reaction does not occur in the lithium secondary battery. Additionally, the cost problem such as the waste of the crosslinking catalyst does not occur.

According to an embodiment of the present disclosure, the silane crosslinked polyolefin composition may be prepared by a single continuous process without preprocessing such as polyolefin grafting, and in this case, there is no need for additional installation and there are cost and process advantages.

As described above, in the preparation of the silane crosslinked polyolefin composition, when the diluent is used as the starting material together with the high density polyolefin and the crosslinking agent, the diluent serves as a lubricant in the extrusion reaction, allowing the grafting reaction on the high molecular weight polyolefin and extrusion.

The extrusion, forming and stretching include any method that can be used in the art without limitation.

The extrusion processing may use a common single or twin screw extruder. The extrusion condition, the stretching condition and the heat-setting condition are not different from ordinary separator processing condition ranges.

According to an embodiment of the present disclosure, the step for forming in a sheet shape and stretching may include extruding the silane grafted polyolefin solution through a die to form an extruded product; cooling the extruded product and forming in a sheet shape; and stretching the product formed in a sheet shape biaxially in the longitudinal direction and the transverse direction to form a stretched sheet.

That is, the silane grafted polyolefin solution obtained through reactive extrusion may be extruded using an extruder with a T dice, and cooled by a typical casting or calendering method using water cooling and air cooling, yielding a cooled extruded product.

Subsequently, the cooled extruded product is stretched to form a sheet.

When the sheet is formed using a high molecular weight high density polyolefin having the weight average molecular weight of 200,000 or more according to the present disclosure, the stretch processing step is possible, and as a result, the enhanced properties such as the strength and the puncture strength required for a separator for a secondary battery may be imparted.

In contrast, when the sheet is formed using a low molecular weight polyolefin, fracture occurs during the stretching process, making it difficult to accomplish a desired magnification level of stretching.

Additionally, when the weight average molecular weight exceeds 1,000,000, it is difficult to manufacture the separator having a uniform thickness due to a thickness difference when forming the separator membrane.

Additionally, the present disclosure uses a high density polyolefin, and if a low density polyolefin is used, the pores

of the separator may be clogged due to the melting temperature of the low density polyolefin.

According to an embodiment of the present disclosure, the stretching may be performed by successive or simultaneous stretching using a roll or a tenter. The stretch ratio is 3 times or more each in the longitudinal direction and the transverse direction, or between 4 times and 10 times, and the total stretch ratio may be between 14 times and 100 times. When the stretch ratio satisfies the above-described numerical range, it is possible to solve the problem with reductions in tensile strength and puncture strength caused by insufficient orientation in one direction and at the same time, the property imbalance between the longitudinal direction and the transverse direction, and as the total stretch ratio satisfies the above-described numerical range, it is possible to avoid the problem with non-stretching or failure to form pores.

In this instance, the stretching temperature may change depending on the melting point of the polyolefin used and the concentration and type of the diluent used.

In a particular embodiment of the present disclosure, for example, when the used polyolefin is polyethylene, the used diluent is liquid paraffin and the kinematic viscosity of the diluent is 40 to 100cSt at 40°C, the stretching temperature may be 70 to 160°C, or 90 to 140°C, or 100 to 130°C for longitudinal stretching, 90 to 180°C, or 110 to 160°C or 120 to 150°C for transverse stretching, and 90 to 180°C, or 110 to 160°C, or 120 to 150°C when stretching is performed simultaneously in two directions.

When the stretching temperature satisfies the above-described numerical range, as the stretching temperature has a low temperature range, it is possible to avoid the problem that fracture occurs in the absence of softness or non-stretching occurs, and it is possible to prevent the partial overstretching or property difference caused by the high stretching temperature.

Subsequently, the diluent is extracted from the stretched sheet to produce a porous membrane (S2).

In detail, the diluent is extracted from the porous membrane using an organic solvent, followed by drying, and in this instance, available organic solvents are not limited to a particular type and include any solvent capable of extracting the diluent used in the resin extrusion.

In a particular embodiment of the present disclosure, the organic solvent includes any type that can extract the diluent without limitation, and methyl ethyl ketone, methylene chloride and hexane with high extraction efficiency and quick drying are proper.

In a particular embodiment of the present disclosure, the extraction method includes all general solvent extraction methods, for example, an immersion method, a solvent spraying method and an ultrasonic method, used singly or in combination. An amount of the diluent remaining after the extraction process is preferably 1 weight% or less. When the amount of the remaining diluent exceeds 1 weight%, the properties degrade and the permeability of the porous membrane reduces. The amount of the remaining diluent may be affected by the extraction temperature and the extraction time, and for the increased solubility of the diluent and the organic solvent, it is good that the extraction temperature is high, but when considering the safety problem caused by the boiling of the organic solvent, 40°C or less is desirable. When the extraction temperature is equal to or less than the freezing point of the diluent, the extraction efficiency greatly reduces, and thus the extraction temperature must be higher than the freezing point of the diluent.

Additionally, the extraction time changes depending on the thickness of the porous membrane, but when the porous membrane is 10 to 30$\mu$m in thickness, 2 to 4 min is proper.

Subsequently, the porous membrane is heat-set and crosslinked for 15 to 48 hours in the presence of water to prepare a separator having a crosslinked polyolefin porous membrane (S3).

The heat-setting works to forcibly eliminate the tendency of the porous membrane to shrink and remove the residual stress by applying heat to the porous membrane in fixed state.

In a particular embodiment of the present disclosure, when the polyolefin is polyethylene, the heat-setting temperature may be 100 to 140°C, or 105 to 135°C, or 110 to 130°C. In case that the polyolefin is polyethylene, when the heat-setting temperature satisfies the above-described numerical range, rearrangement of polyolefin molecules occurs, thereby removing the residual stress of the porous membrane, and due to the partial melting, pore clogging of the porous membrane may reduce. As the heat-setting temperature is higher, thermal shrinkage of the manufactured separator may improve, and as the heat-setting temperature is lower, the separator resistance may reduce.

In a particular embodiment of the present disclosure, the time of the heat-setting temperature may be 10 to 120 sec, 20 to 90 sec, or 30 to 60 sec. When the heat-setting is performed during the time, rearrangement of polyolefin molecules occurs, thereby removing the residual stress of the porous membrane, and due to the partial melting, pore closing of the porous membrane may reduce.

In a particular embodiment of the present disclosure, the crosslinking may be performed at 60 to 100°C, or 65 to 95°C, or 70 to 90°C.

In a particular embodiment of the present disclosure, the crosslinking may be performed at the humidity 35 to 95% for 15 to 100 hours. When the crosslinking time is less than 15 hours, the crosslinked polyolefin membrane reduces in the degree of crosslinking, and as a result, the meltdown temperature may not reach the desired temperature range. Accordingly, due to a small difference between shutdown temperature and meltdown temperature, processing and/or safety of the lithium secondary battery may degrade, or due to a small difference between meltdown temperature and self-heating temperature, processing and/or safety of the lithium secondary battery may degrade. In an aspect of the present disclosure, it is possible to control the processing in the separator membrane formation and/or safety of the lithium secondary battery by controlling the crosslinking time.

Subsequently, the prepared separator is interposed between the positive electrode and the negative electrode (S4). The method for interposing the separator is not limited to a particular method, and includes any method for interposing the separator between the electrodes, commonly used in the art.

The positive electrode and negative electrode may be made by binding an electrode active material to a current collector according to a method commonly known in the art.

In a particular embodiment of the present disclosure, the positive electrode includes a current collector; and a positive electrode active material layer disposed on the current collector and including a positive electrode active material.

The positive electrode active material may include $Li[Ni_aCo_bMn_cM_{1d}M_{2e}]O_2$ ($M_1$ and $M_2$ are independently any one selected from the group consisting of Al, Ni, Co, Fe, Mn, V, Cr, Ti, W, Ta, Mg and Mo, and a, b, c, d and e are independently atomic fractions of elements in the oxide composition where $a \geq 0.5$, $a+b+c+d+e = 1$, $b>d>e$).

For details about the positive electrode active material, a reference is made to the description provided above.

Non-limiting examples of the negative electrode active material include general negative electrode active materials that can be used in the negative electrode of the conventional electrochemical device, and in particular, the preferred negative electrode active material is lithium adsorption materials such as lithium metal or lithium alloy, carbon, petroleum coke, activated carbon, graphite or other carbons. Non-limiting examples of the positive electrode current collector include a foil made from aluminum, nickel or their combination, and non-limiting examples of the negative electrode current collector include a foil made from copper, gold, nickel or copper alloy or their combination.

The electrolyte solution that can be used in the lithium secondary battery of the present disclosure includes, but is not limited to, electrolyte solutions in which a salt is dissolved or dissociated in an organic solvent, the salt having a structure represented by, for example, $A^+B^-$ wherein $A^+$ is an alkali metal cation such as $Li^+$, $Na^+$, $K^+$, or their combination and $B^-$ is an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$, or their combination, and the organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), $\gamma$-butyrolactone, or their mixture.

The pouring of the electrolyte solution may be performed in any suitable step of a battery fabrication process based on a manufacturing process and required properties of a final product. That is, the pouring of the electrolyte solution may be applied before battery assembly or in the final step of battery assembly.

Hereinafter, the present disclosure will be described in detail through examples. The examples of the present disclosure, however, may be modified in many other forms, and the scope of the present disclosure should not be construed as being limited to the following examples. The examples of the present disclosure are provided to fully explain the present disclosure to those having ordinary knowledge in the art to which the present disclosure pertains.

## Example 1

(1) Preparation of separator

First, 10.5kg of high density polyethylene having the weight average molecular weight of 300,000 (Korea Petrochemical, VH095) as the polyolefin, 19.5kg of liquid paraffin oil (Kukdong Oil & Chemicals LP350F, kinematic viscosity of 67.89cSt at 40°C) as the diluent, 600g of vinyltrimethoxysilane as the vinyl group-containing alkoxy silane, 6g of dibutyltin dilaurate as the crosslinking catalyst, and 6g of 2,5-dimethyl-2,5-di(tert-butylperoxy)hexane (DHBP) as the initiator are inputted into an extruder and mixed. The weight ratio of the high density polyethylene and the liquid paraffin oil is 35:65. That is, vinyltrimethoxysilane is present in an amount of 2 parts by weight based on the total 100 parts by weight of the polyolefin and the diluent.

These components are inputted into a twin screw extruder having an L/D of 56 and mixed to prepare a polyethylene composition, and at the same time, reactive extrusion was performed under the temperature condition of 200°C to prepare a silane grafted polyethylene composition.

The polyolefin composition for crosslinking is formed in a sheet shape through a die and a cooling casting roll, and subsequently, biaxial stretching is performed using a tenter type successive stretching machine in MD direction first and then in TD direction to produce a complex sheet. In this instance, the MD stretch ratio and the TD stretch ratio are all set to 5.5 times. The stretching temperature is 108°C in MD and 123°C in TD.

The liquid paraffin oil is extracted from the obtained sheet using methylene chloride, and heat-setting is performed at 127°C to produce a crosslinked polyolefin porous membrane. Crosslinking is performed with the obtained porous membrane being placed in a steady temperature and humidity room of 80°C and 90% humidity for 24 hours, to prepare a separator having the crosslinked polyolefin porous membrane including at least one silane crosslinking bond.

(2) Manufacture of lithium secondary battery

1) Preparation of negative electrode

Artificial graphite, carbon black, CMC, binder (Zeon BM-L301) of a 95.8:1:1.2:2 weight ratio are mixed with water to prepare a negative electrode slurry. The negative electrode slurry is coated on a Cu-foil to the thickness of 50$\mu$m, made in the form of a thin polar plate, dried at 135°C for 3 hours or more and pressed to manufacture a negative electrode.

2) Preparation of positive electrode

Nickel cobalt manganese based positive electrode active material $LiNi_{0.8}Co_{0.1}Mn_{0.1}O_2$ (nickel: cobalt: manganese = 8 : 1 : 1, GS EM, GL80, self-heating temperature 158°C), carbon black and PVDF of a 97:1.5:1.5 weight ratio are mixed with NMP to manufacture a positive electrode slurry. The positive electrode slurry is coated on an aluminum foil to the thickness of 20 $\mu$m, made in the form of a thin polar plate, dried at 135°C for 3 hours or more and pressed to manufacture a positive electrode.

3) Manufacture of lithium secondary battery

Subsequently, the prepared separator is interposed between the negative electrode and the positive electrode and stacked to prepare a stack type electrode assembly, and the stack type electrode assembly is inserted into a pouch case, and an electrolyte solution is injected to manufacture a lithium secondary battery, the electrolyte solution in which 1M $LiPF_6$ is dissolved in a solvent of ethylene carbonate (EC) and diethyl carbonate (DEC) mixed at a 30:70 volume ratio.

## Example 2

A lithium secondary battery is manufactured in the same way as example 1, except that the separator is prepared as below.

In detail, the separator is prepared in the same way as example 1-(1) separator except that vinyltrimethoxysilane is present in an amount of 0.5 parts by weight based on the total 100 parts by weight of the polyolefin and the diluent.

## Example 3

A lithium secondary battery is manufactured in the same way as example 1, except that the separator is prepared as below.

In detail, the separator is prepared in the same way as example 1-(1) separator except that instead of vinyltrimethoxysilane, vinyltriethoxysilane is present in an amount of 1.5 parts by weight based on the total 100 parts by weight of the polyolefin and the diluent.

## Example 4

A lithium secondary battery is manufactured in the same way as example 1, except that the separator is prepared as below.

In detail, the separator is prepared in the same way as example 1-(1) separator except that polyethylene having the weight average molecular weight of 200,000 (LG CHEM., XL1800) is used.

## Example 5

A lithium secondary battery is manufactured in the same way as example 1, except that the positive electrode is prepared as below.

In detail, the positive electrode is prepared in the same way as example 1-(2)-2) positive electrode except that the positive electrode slurry is prepared using a nickel cobalt manganese based positive electrode active material $LiNi_{0.5}Co_{0.2}Mn_{0.3}O_2$ (nickel: cobalt: manganese = 5 : 2 : 3, Ronbay S740, self-heating temperature 183°C), carbon nano tube (CNT) and polyvinylidene fluoride(PVDF) at a 97:1.5:1.5 weight ratio.

## Example 6

A lithium secondary battery is manufactured in the same way as example 1, except that the positive electrode is prepared as below.

In detail, the positive electrode is prepared in the same way as example 1-(2)-2) positive electrode except that the positive electrode slurry is prepared using a nickel cobalt manganese based positive electrode active material $LiNi_{0.7}Co_{0.1}Mn_{0.2}O_2$ (nickel: cobalt: manganese = 7 : 1 : 2, LG CHEM., self-heating temperature 166°C), CNT and PVDF at a 97:1.5:1.5 weight ratio.

## Example 7

A lithium secondary battery is manufactured in the same way as example 1, except that the positive electrode is prepared as below.
In detail, the positive electrode is prepared in the same way as example 1-(2)-2) positive electrode except that the positive electrode slurry is prepared using a nickel cobalt manganese aluminum based positive electrode active material $LiNi_{0.88}Co_{0.05}Mn_{0.05}Al_{0.02}O_2$ (nickel: cobalt: manganese: aluminum = 88 : 5 : 5 : 2, LG CHEM., HN803, self-heating temperature 161°C), CNT and PVDF at a 97:1.5:1.5 weight ratio.

## Example 8

A lithium secondary battery is manufactured in the same way as example 1, except that the separator is prepared as below and example 6 positive electrode is used.
In detail, the separator is prepared in the same way as example 1-(1) separator except that the separator is placed in a constant temperature and humidity chamber for 18 hours shorter than example 1-(1).

## Example 9

A lithium secondary battery is manufactured in the same way as example 1, except that example 8 separator and example 7 positive electrode are used.

## Example 10

A lithium secondary battery is manufactured in the same way as example 1, except that the separator is prepared as below and example 5 positive electrode is used.
In detail, the separator is prepared in the same way as example 1-(1) separator except that vinyltrimethoxysilane is present in an amount of 2.5 parts by weight based on the total 100 parts by weight of the polyolefin and the diluent.

## Comparative example 1

A lithium secondary battery is manufactured in the same way as example 1, except that the separator is prepared as below.
In detail, the separator is prepared in the same way as example 1-(1) separator except that vinyltrimethoxysilane is present in an amount of 7 parts by weight based on the total 100 parts by weight of the polyolefin and the diluent. After operation for 1.5 hours or more, a drool phenomenon occurs on the die lips, and it is impossible to ensure processing due to the membrane appearance.

## Comparative example 2

A lithium secondary battery is manufactured in the same way as example 1, except that the separator is prepared as below.
In detail, the separator is prepared in the same way as example 1-(1) separator except that instead of vinyltrimethoxysilane, vinyltriethoxysilane is present in an amount of 7 parts by weight based on the total 100 parts by weight of the polyolefin and the diluent. After operation for 2 hours or more, a drool phenomenon occurs on the die lips, and it is impossible to ensure processing due to the membrane appearance.

## Comparative example 3

A lithium secondary battery is manufactured in the same way as example 1, except that the separator is prepared as below.
In detail, the separator is prepared in the same way as example 1-(1) separator except that the crosslinking additive (the vinyl group-containing alkoxy silane, the crosslinking catalyst, and the initiator) is not inputted.

**Comparative example 4**

A lithium secondary battery is manufactured in the same way as example 1, except that comparative example 3 separator and example 5 positive electrode are used.

**Comparative example 5**

A lithium secondary battery is manufactured in the same way as example 1, except that the separator is prepared as below.

In detail, the separator is prepared in the same way as example 1-(1) separator except that polyethylene (Korea Petrochemical, VH100U) having the weight average molecular weight of 1,050,000 is used. A film having a uniform thickness cannot be obtained due to a thickness difference when forming the separator membrane. Accordingly, it is impossible to determine the shutdown temperature and the meltdown temperature of the separator as well as a difference between the meltdown temperature of the separator and the self-heating temperature of the positive electrode .

**Comparative example 6**

A lithium secondary battery is manufactured in the same way as example 1, except that the separator is prepared as below and example 6 positive electrode is used.

In detail, the separator is prepared in the same way as example 1-(1) separator except that the separator is placed in a constant temperature and humidity chamber for 10 hours shorter than example 1-(1).

**Comparative example 7**

A lithium secondary battery is manufactured in the same way as example 1, except that comparative example 2 separator and example 5 positive electrode are used.

**Comparative example 8**

A lithium secondary battery is manufactured in the same way as example 1, except that the separator is prepared as below and example 6 positive electrode is used.

In detail, the separator is prepared in the same way as example 1-(1) separator except that instead of high density polyolefin (Korea Petrochemical, VH095), low density polyethylene (LG CHEM. SEETEC BF315) is used. Comparative example 8 has pore clogging in the separator preparation process due to the low melting temperature of the low density polyethylene.

**Comparative example 9**

A lithium secondary battery is manufactured in the same way as comparative example 2, except that the positive electrode is prepared as below.

In detail, the positive electrode is prepared in the same way as example 1-(2)-2) positive electrode except that the positive electrode slurry is prepared using a nickel cobalt manganese based positive electrode active material $LiNi_{0.33}Co_{0.33}Mn_{0.33}O_2$ (nickel: cobalt: manganese = 33 : 33 : 33 , LG CHEM., TP1, self-heating temperature 206°C), CNT and PVDF at a 97:1.5:1.5 weight ratio.

**Experimental example 1**

The performance of the positive electrode, the separator and the lithium secondary battery prepared in examples 1 to 10 and comparative examples 1 to 9 is evaluated and shown in Table 1.

[Table 1]

| | Positive electrode self-heating temperatur e (°C) | Separator shutdown temperature (°C) | Separator meltdown temperature (°C) | Difference between shutdow n temperat ure and meltdow n temperat ure (°C) | Differenc e between meltdown temperatu re and positive electrode self-heating temperatu re (°C) | Separator preparation processing | Battery resistance evaluation data | Battery safety evaluation data |
|---|---|---|---|---|---|---|---|---|
| Example 1 | 158 | 139 | 192 | 53 | 34 | OK | OK | Pass |
| Example 2 | 158 | 141 | 183 | 42 | 25 | OK | OK | Pass |
| Example 3 | 158 | 140 | 189 | 49 | 31 | OK | OK | Pass |
| Example 4 | 158 | 139 | 191 | 52 | 33 | OK | OK | Pass |
| Example 5 | 183 | 139 | 192 | 53 | 9 | OK | OK | Pass |
| Example 6 | 166 | 139 | 192 | 53 | 27 | OK | OK | Pass |
| Example 7 | 161 | 139 | 192 | 53 | 31 | OK | OK | Pass |
| Example 8 | 166 | 139 | 179 | 40 | 13 | OK | OK | Pass |
| Example 9 | 161 | 139 | 179 | 40 | 18 | OK | OK | Pass |
| Example 10 | 183 | 136 | 210 | 74 | 27 | OK | OK | Pass |
| Comparativ e example1 | 158 | 134 | 221 | 87 | 63 | NG | OK | Pass |
| Comparativ e example2 | 158 | 135 | 217 | 82 | 59 | NG | OK | Pass |
| Comparativ e example3 | 158 | 142 | 153 | 11 | -5 | OK | OK | Fail |
| Comparativ e example4 | 183 | 142 | 153 | 11 | -30 | OK | OK | Fail |
| Comparativ e example5 | - | - | - | - | - | NG | | - |
| Comparativ e example6 | 166 | 139 | 168 | 29 | 2 | OK | OK | Fail |
| Comparativ e example7 | 183 | 135 | 217 | 82 | 34 | NG | OK | Pass |
| Comparativ e example8 | 166 | 116 | 198 | 82 | 32 | NG | NG | Pass |
| Comparativ e example9 | 206 | 135 | 217 | 82 | 11 | NG | OK | Pass |

**(1) Method for measuring self-heating temperature of positive electrode:**

The self-heating temperature of the positive electrode may be measured using Differential Scanning Calorimetry (DSC). The first peak temperature in heat changes in the direction of heat generation of the positive electrode exposed to the increasing temperature condition (5°C/min starting from 30°C) is defined as the self-heating temperature.

**(2) Method for measuring shutdown temperature of separator:**

For the shutdown temperature, air permeability of the porous membrane is measured, with the porous membrane being exposed to the increasing temperature condition (5°C/min starting from 30°C). The shutdown temperature of the porous membrane is defined as temperature when air permeability (Gurley number) of the microporous membrane exceeds 100,000 sec/100cc for the first time. In this instance, air permeability of the porous membrane may be measured using air permeability measurement instrument (Asahi Seiko, EGO-IT) in accordance with JIS P8117.

**(3) Method for measuring meltdown temperature of separator:**

The meltdown temperature is measured by Thermomechanical Analysis (TMA) after each porous membrane sample in MD and TD is collected. In detail, the sample of 10mm length is put into TMA equipment (TA Instrument, Q400) and allowed to be exposed to the increasing temperature condition (5°C/min starting from 30°C) under the tension force of 10mN. As the temperature increases, the length of the sample changes, and the temperature when the sample is broken due to the sharp increase in length is measured. Each of MD and TD is measured, and a higher temperature is defined as the meltdown temperature of the corresponding sample.

**(4) Method for evaluating battery resistance**

The resistance of the manufactured battery is measured using Hioki under 1kHz condition, and resistance within 3% range on the basis of example 1 is determined as 'pass'.

**(5) Method for evaluating battery safety:**

The battery safety is evaluated by fully charging the manufactured battery and conducting nail penetration evaluation at room temperature. When there is no fire 12 hours after nail penetration, it is determined as pass.

In detail, the fully charged lithium secondary battery is placed between 10T thick aluminum plates having a 50 mm circular hole at the center and compressed. The nail having the diameter 5 mm and the tip angle of 45° penetrates at 25 mm/sec (according to the Chinese Standard).

According to Table 1, in all the examples of the present disclosure, the shutdown temperature of the separator is between 125 and 145°C, a difference between shutdown temperature and meltdown temperature is between 20 and 80°C, and a difference between meltdown temperature and self-heating temperature satisfies the range between 5 and 35°C, and thus it is possible to provide the lithium secondary battery with processing and safety and low electrical resistance.

In contrast, when any one of the components is not satisfied, the intended effect of the present disclosure cannot be achieved.

In detail, in the case of comparative examples 1 and 2, a difference between shutdown temperature and meltdown temperature exceeds 80°C, and in this case, processing is not ensured. To increase a difference between shutdown temperature and meltdown temperature, the meltdown temperature may be increased, and due to the increasing amount of crosslinking agent with the increasing meltdown temperature, presumably processing reduces. In detail, as shown in FIG. 1, it can be seen that die drool (a phenomenon in which impurities appear on the extruded T-die) occurs and processing in the manufacture of the separator reduces. As shown in FIG. 1, when die drool occurs, local pore clogging on the separator surface occurs, resulting in a large resistance difference in the surface direction of the separator. Accordingly, as shown in experimental example 2, movements of lithium ions are not smooth and thus the cycling characteristics degrade. In contrast, in the case of examples 1 to 4, a die drool phenomenon does not occur and thus processing is good, and the cycling characteristics are good as in experimental example 2 described below.

In the case of comparative example 3, a difference between shutdown temperature and meltdown temperature is less than 20°C, and due to the low difference, it fails the battery safety evaluation. Additionally, due to the low meltdown temperature, a difference between self-heating temperature of the positive electrode and meltdown temperature is small and thus effects are low in terms of safety.

In the case of comparative example 4, because the uncrosslinked polyolefin separator and the positive electrode of a high self-heating temperature are used, a difference between meltdown temperature and self-heating temperature is found -30°C. Accordingly, safety of the manufactured lithium secondary battery is very low.

In the case of comparative example 5, it is difficult to form the separator membrane, which makes it impossible to measure the shutdown temperature and the meltdown temperature.

In the case of comparative example 6, the degree of crosslinking of the crosslinked polyolefin membrane is low, a temperature difference between meltdown temperature and shutdown temperature is small, and a temperature difference between meltdown temperature and self-heating temperature is also low. The safety of the manufactured lithium secondary battery significantly degrades. In detail, comparative example 6 fails the nail penetration test. This is shown in FIG. 2. (a) and (b) of FIG. 2 show the cell shape before/after the nail penetration test of comparative example 6 respectively. As shown in (b) of FIG. 2, in the case of comparative example 6, fire occurs after the nail penetration test. In contrast, the cells of examples of the present disclosure are not fired after the nail penetration test. (a) and (b) of FIG. 3 show the cell shape before/after the nail penetration test of example 1 respectively. As shown in (b) of FIG. 3, it can be seen that in the case of example 1, fire does not occur after the nail penetration test, and battery safety is good.

In the case of comparative example 7, a temperature difference between shutdown temperature and meltdown temperature is too large, and the meltdown temperature is too high, so it is unsuitable in terms of processing.

In the case of comparative example 8, the shutdown temperature is particularly low and electrical resistance is high, and thus the battery performance is poor, and a temperature difference between shutdown temperature and meltdown temperature is too large and the meltdown temperature is too high, and thus it is unsuitable in terms of processing.

Comparative example 9 increases the meltdown temperature to control the meltdown temperature higher than the self-heating temperature of the positive electrode. However, due to the increasing amount of vinyl group-containing alkoxy silane with the increasing meltdown temperature, it is unsuitable in terms of processing.

**Experimental example 2**

[Table 2]

| | Example 1 | Example 2 | Example 3 | Example 4 | Comparative example 1 | Comparative example 2 | Comparative example 9 |
|---|---|---|---|---|---|---|---|
| Cycling characteristi cs(%) | 92.3 | 93.5 | 92.7 | 92.1 | 86.4 | 87.3 | 64.9 |

**Method for evaluating cycling characteristics:** After determining the capacity of each battery manufactured in the same way as the method described in examples 1 to 4 and comparative examples 1, 2 and 9 at 25°C and 0.2C charging/discharging rate, cycling characteristics are evaluated in CC/CV charging (4.2V 1/20 C cut) and 0.5C CC discharging (3.0V cut) at 0.7C at the same temperature on the basis of the corresponding capacity of each battery. However, in the case of comparative example 9, when charged with 4.2V in the same way, compared to other experimental examples, energy density is too low, so the charge voltage is changed to 4.35V and evaluation is conducted. After repeated charges and discharges in 600 cycles, 300 cycle discharge capacity relative to first discharge capacity is determined as the remaining capacity.

As can be seen from Table 2, compared to comparative examples 1 and 2 in which die drool occurs, examples have a cycle performance increase of about 5~7%. In particular, in the case of comparative examples 1 and 2 in which the ranges of self-heating temperature and meltdown temperature are outside of 9 to 34°C, cycle performance does not exceed 90%. Comparative example 9 shows cycling characteristics that are lower by about 30% than examples. In contrast, examples of the present disclosure show high cycle performance of 92 to 93%.

## Claims

**1.** A lithium secondary battery comprising a positive electrode, a negative electrode and a separator interposed between the positive electrode and the negative electrode,

**characterized in that** the separator includes a crosslinked polyolefin porous membrane crosslinked by siloxane crosslinking bonds or peroxide crosslinking bonds and having a shutdown temperature of 125 to 145°C, a difference between the shutdown temperature and a meltdown temperature ranging between 20 and 80°C, and a meltdown temperature that is higher by 5 to 35°C than a self-heating temperature of the positive electrode, and

wherein the positive electrode comprises a current collector having disposed thereon a positive electrode active material layer comprising $Li[Ni_aCo_bMn_cM_{1d}M_{2e}]O_2$ as a positive electrode active material, wherein $M_1$ and $M_2$ are independently any one selected from the group consisting of Al, Ni, Co, Fe, Mn, V, Cr, Ti, W, Ta, Mg and Mo, and a, b, c, d and e are independently atomic fractions of elements in the oxide composition where $a \geq 0.5$, $a+b+c+d+e = 1$ and $b>d>e$.

2. The lithium secondary battery according to Claim 1, wherein the self-heating temperature of the positive electrode is 150 to 220°C.

3. The lithium secondary battery according to Claim 1, wherein the shutdown temperature is 136 to 141°C.

4. The lithium secondary battery according to Claim 1, wherein the difference between the shutdown temperature and the meltdown temperature is 40 to 74°C.

5. The lithium secondary battery according to Claim 1, wherein the crosslinked polyolefin porous membrane has a meltdown temperature that is higher by 9 to 34°C than the self-heating temperature of the positive electrode.

6. The lithium secondary battery according to Claim 1, wherein in the positive electrode active material, d and e = 0, and $0.5 \leq a \leq 0.95$.

7. The lithium secondary battery according to Claim 6, wherein $0.6 \leq a \leq 0.95$.

8. The lithium secondary battery according to Claim 1, wherein in the positive electrode active material, $M_1$ is Al, $0.6 \leq a \leq 0.95$, and $0.01 \leq d \leq 0.10$.

9. The lithium secondary battery according to Claim 1, wherein the meltdown temperature of the crosslinked polyolefin porous membrane is 150 to 230°C.

10. The lithium secondary battery according to Claim 9, wherein the meltdown temperature of the crosslinked polyolefin porous membrane is 179 to 210°C.

11. The lithium secondary battery according to Claim 2, wherein the self-heating temperature of the positive electrode is 158 to 183°C.

12. A method for manufacturing a lithium secondary battery as defined in Claim 1, comprising:

(S1) inputting a high density polyolefin having a weight average molecular weight of 200,000 to 1,000,000, a diluent, a vinyl group-containing alkoxy silane, an initiator and a crosslinking catalyst into an extruder and mixing to prepare a silane grafted polyolefin composition, followed by reactive extrusion, and forming and stretching;
(S2) extracting the diluent from the stretched sheet to prepare a polyolefin porous membrane;
(S3) heat-setting the porous membrane and crosslinking for 15 hours to 48 hours in the presence of water to prepare a separator having the crosslinked polyolefin porous membrane; and
(S4) interposing the separator including the crosslinked polyolefin porous membrane between a positive electrode and a negative electrode;
wherein the vinyl group-containing alkoxy silane is present in an amount of 0.1 to 4 parts by weight based on a total of 100 parts by weight of the polyolefin and the diluent.

## Patentansprüche

1. Lithiumsekundärbatterie, umfassend eine positive Elektrode, eine negative Elektrode und einen Separator, der positiven Elektrode und der negativen Elektrode eingefügt ist, **dadurch gekennzeichnet, dass**

der Separator eine poröse vernetzte Polyolefinmembran einschließt, die durch Siloxanvernetzungsbindungen oder Peroxidvernetzungsbindungen vernetzt ist und eine Abschalttemperatur von 125 bis 145°C, eine Differenz zwischen der Abschalttemperatur und einer Schmelztemperatur im Bereich von 20 bis 80°C und eine Schmelztemperatur, die um 5 bis 35°C höher als die Selbsterwärmungstemperatur der positiven Elektrode ist, aufweist und

wobei die positive Elektrode einen Stromkollektor umfasst, der eine darauf aufgebrachte Aktivmaterialschicht für eine positive Elektrode aufweist, die $Li[Ni_aCo_bMn_cM_{1d}M_{2e}]O_2$ als Aktivmaterial für eine positive Elektrode umfasst, worin $M_1$ und $M_2$ unabhängig eines, ausgewählt aus der Gruppe, bestehend aus Al, Ni, Co, Fe, Mn, V, Cr, Ti, W, Ta, Mg und Mo, sind und a, b, c, d und e unabhängig Atomanteile der Elemente in der Oxidzusammensetzung sind, wobei a≥0,5, a+b+c+d+e = 1 und b>d>e ist.

2. Lithiumsekundärbatterie gemäß Anspruch 1, wobei die Selbsterwärmungstemperatur der positiven Elektrode 150 bis 220°C beträgt.

3. Lithiumsekundärbatterie gemäß Anspruch 1, wobei die Abschalttemperatur 136 bis 141°C beträgt.

4. Lithiumsekundärbatterie gemäß Anspruch 1, wobei die Differenz zwischen der Abschalttemperatur und der Schmelztemperatur 40 bis 74°C beträgt.

5. Lithiumsekundärbatterie gemäß Anspruch 1, wobei die poröse vernetzte Polyolefinmembran eine Schmelztemperatur aufweist, die um 9 bis 34°C höher als die Selbsterwärmungstemperatur der positiven Elektrode ist.

6. Lithiumsekundärbatterie gemäß Anspruch 1, wobei in dem Aktivmaterial für eine positive Elektrode d und e = 0 sind und 0,5≤a≤0,95 ist.

7. Lithiumsekundärbatterie gemäß Anspruch 6, wobei 0,6≤a≤0,95 ist.

8. Lithiumsekundärbatterie gemäß Anspruch 1, wobei in dem Aktivmaterial für eine positive Elektrode $M_1$ Al ist, 0,6≤a≤0,95 und 0,01≤d≤0,10 ist.

9. Lithiumsekundärbatterie gemäß Anspruch 1, wobei die Schmelztemperatur der porösen vernetzten Polyolefinmembran 150 bis 230°C beträgt.

10. Lithiumsekundärbatterie gemäß Anspruch 9, wobei die Schmelztemperatur der porösen vernetzten Polyolefinmembran 179 bis 210°C beträgt.

11. Lithiumsekundärbatterie gemäß Anspruch 2, wobei die Selbsterwärmungstemperatur der positiven Elektrode 158 bis 183°C beträgt.

12. Verfahren zur Herstellung einer in Anspruch 1 definierten Lithiumsekundärbatterie, umfassend:

(S1) Einbringen eines Polyolefins hoher Dichte mit einem gewichtsmittleren Molekulargewicht von 200.000 bis 1.000.000, eines Verdünnungsmittels, eines vinylgruppenhaltigen Alkoxysilans, eines Initiators und eines Vernetzungskatalysators in einen Extruder und Mischen, um eine silangepfropfte Polyolefinzusammensetzung herzustellen, gefolgt von einer reaktiven Extrusion und Formgebung und Streckung,
(S2) Extrahieren des Verdünnungsmittels aus der gestreckten Folie, um eine poröse Polyolefinmembran herzustellen,
(S3) Thermofixieren der porösen Membran und Vernetzen für 15 Stunden bis 48 Stunden in Gegenwart von Wasser, um einen Separator mit der porösen vernetzten Polyolefinmembran herzustellen, und
(S4) Einfügen des Separators, der die poröse vernetzte Polyolefinmembran einschließt, zwischen einer positiven Elektrode und einer negativen Elektrode,
wobei das vinylgruppenhaltige Alkoxysilan in einer Menge von 0,1 bis 4 Gewichtsteilen, bezogen auf insgesamt 100 Gewichtsteile des Polyolefins und des Verdünnungsmittels, vorhanden ist.

## Revendications

1. Batterie secondaire au lithium comprenant une électrode positive, une électrode négative et un séparateur interposé entre l’électrode positive et l’électrode négative,
**caractérisée en ce que**

le séparateur inclut une membrane poreuse en polyoléfine réticulée par des liaisons de réticulation de type siloxane ou des liaisons de réticulation par peroxyde et présentant une température d’arrêt de 125 à 145 °C, une

différence entre la température d'arrêt et une température de fusion se situant entre 20 et 80 °C et une température de fusion qui est supérieure de 5 à 35 °C à une température d'auto-échauffement de l'électrode positive, et
dans laquelle l'électrode positive comprend un collecteur de courant ayant une couche de matériau actif d'électrode positive disposée sur celui-ci comprenant $Li[Ni_aCo_bMn_cM_{1d}M_{2e}]O_2$ en tant que matériau actif d'électrode positive,
dans laquelle $M_1$ et $M_2$ sont indépendamment un élément quelconque sélectionné dans le groupe consistant en Al, Ni, Co, Fe, Mn, V, Cr, Ti, W, Ta, Mg et Mo, et a, b, c, d et e sont indépendamment des fractions atomiques des éléments dans la composition de l'oxyde où $a \geq 0,5$, $a+b+c+d+e = 1$ et $b>d>e$.

**2.** Batterie secondaire au lithium selon la revendication 1, dans laquelle la température d'auto-échauffement de l'électrode positive est de 150 à 220 °C.

**3.** Batterie secondaire au lithium selon la revendication 1, dans laquelle la température d'arrêt est de 136 à 141 °C.

**4.** Batterie secondaire au lithium selon la revendication 1, dans laquelle la différence entre la température d'arrêt et la température de fusion est de 40 à 74 °C.

**5.** Batterie secondaire au lithium selon la revendication 1, dans laquelle la membrane poreuse en polyoléfine réticulée présente une température de fusion qui est supérieure de 9 à 34 °C à la température d'auto-échauffement de l'électrode positive.

**6.** Batterie secondaire au lithium selon la revendication 1, dans laquelle, dans le matériau actif d'électrode positive, d et e = 0, et $0,5 \leq a \leq 0,95$.

**7.** Batterie secondaire au lithium selon la revendication 6, dans laquelle $0,6 \leq a \leq 0,95$.

**8.** Batterie secondaire au lithium selon la revendication 1, dans laquelle, dans le matériau actif d'électrode positive, $M_1$ est Al, $0,6 \leq a \leq 0,95$, et $0,01 \leq d \leq 0,10$.

**9.** Batterie secondaire au lithium selon la revendication 1, dans laquelle la température de fusion de la membrane poreuse en polyoléfine réticulée est de 150 à 230 °C.

**10.** Batterie secondaire au lithium selon la revendication 9, dans laquelle la température de fusion de la membrane poreuse en polyoléfine réticulée est de 179 à 210 °C.

**11.** Batterie secondaire au lithium selon la revendication 2, dans laquelle la température d'auto-échauffement de l'électrode positive est de 158 à 183 °C.

**12.** Procédé de fabrication d'une batterie secondaire au lithium telle que définie dans la revendication 1, comprenant :

(S1) introduire une polyoléfine de haute densité présentant une masse moléculaire moyenne en poids de 200 000 à 1 000 000, un diluant, un alcoxysilane contenant un groupe vinyle, un initiateur et un catalyseur de réticulation dans une extrudeuse et mélanger afin de préparer une composition de polyoléfine greffée au silane, puis procéder à une extrusion réactive, et à la formation et à l'étirage ;
(S2) extraire le diluant de la feuille étirée afin de préparer une membrane poreuse en polyoléfine ;
(S3) stabiliser thermiquement la membrane poreuse et procéder à une réticulation en présence d'eau pendant 15 heures à 48 heures afin de préparer un séparateur présentant la membrane poreuse en polyoléfine réticulée ; et,
(S4) interposer le séparateur incluant la membrane poreuse en polyoléfine réticulée entre une électrode positive et une électrode négative ;
dans lequel l'alcoxysilane contenant un groupe vinyle est présent en une quantité de 0,1 à 4 parties en poids sur la base d'un total de 100 parties en poids de la polyoléfine et du diluant.

FIG. 1

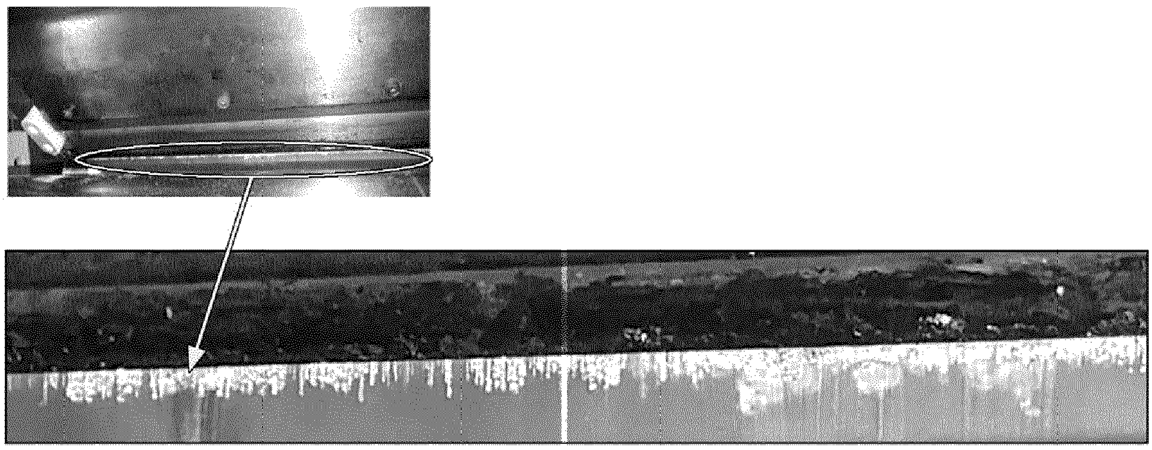

FIG. 2

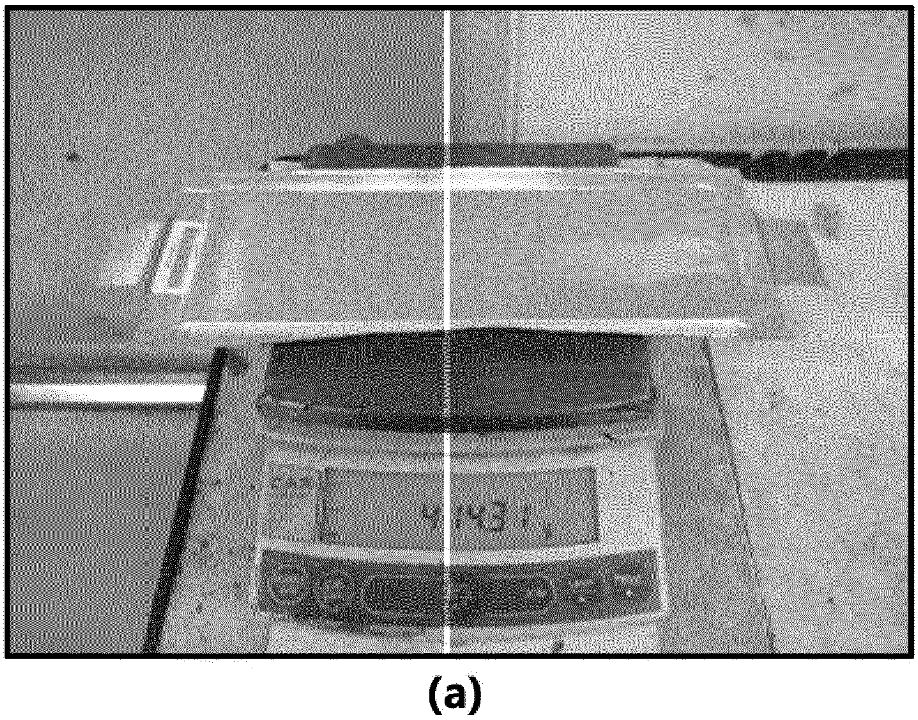

(a)

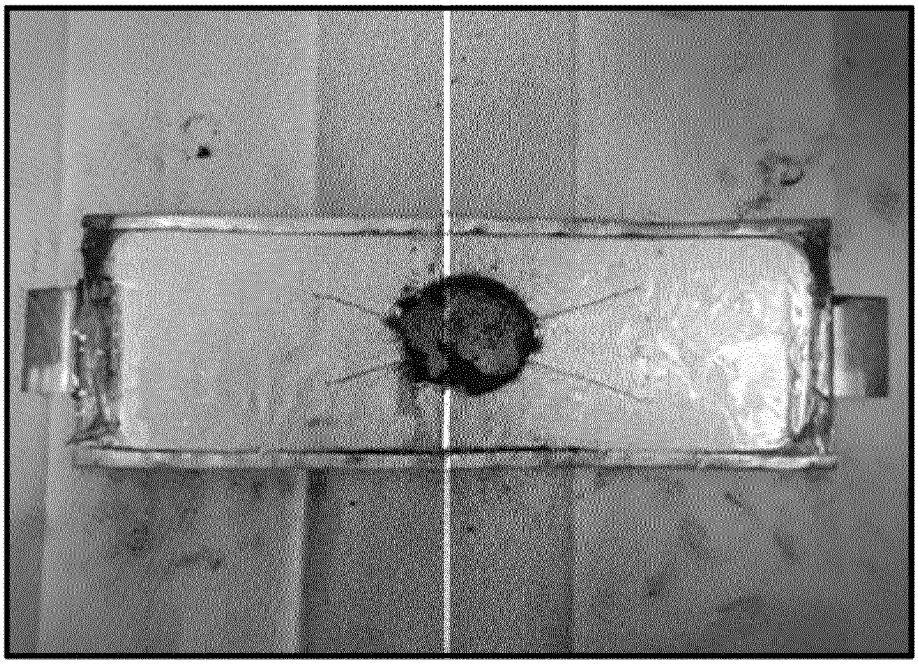

(b)

**FIG. 3**

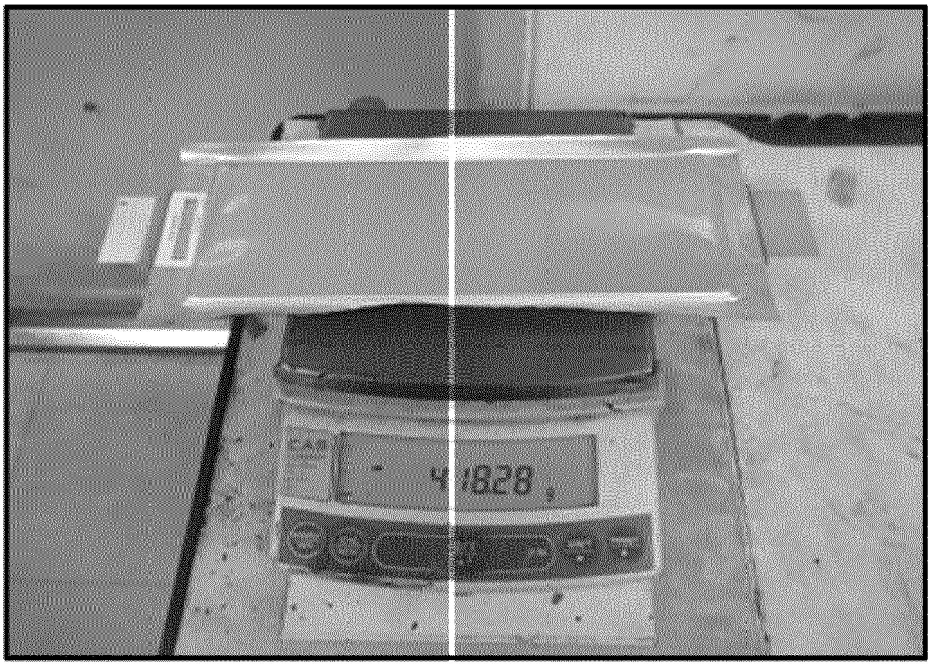

(a)

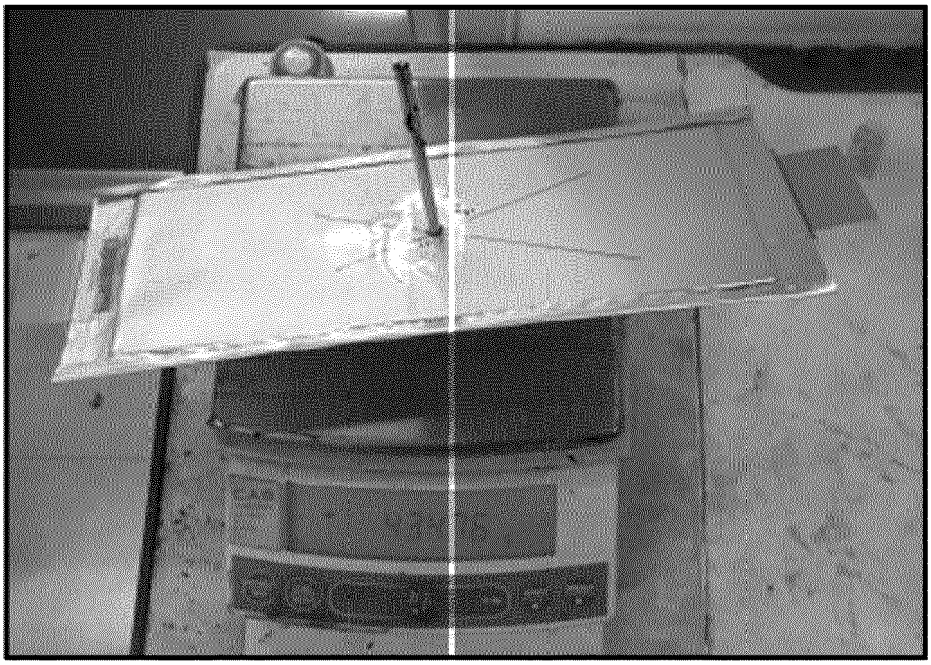

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2011052987 A
- US 2012088149 A
- KR 1020160129583